# EUROPEAN PATENT SPECIFICATION

(11) **EP 0 824 409 B1**
(45) Date of publication and mention of the grant of the patent: **27.06.2001**
(21) Application number: 97908162.7
(22) Date of filing: 03.03.1997
(51) Int. Cl.: B60B 19/10

(54) **WHEEL RIM FOR VEHICLES**
RAD FÜR KRAFTFAHRZEUGE
JANTE POUR VEHICULES

(30) Priority: 06.03.1996 IT PD960058
(43) Date of publication of application: 25.02.1998
(73) Proprietor: Sonzini, Ambrogio, 44030 Ro Ferrarese (IT)
(72) Inventor: BELLOTTO, Giorgio, I-35042 Este (IT)
(74) Representative: Modiano, Guido, Dr.-Ing.
(86) International application number: EP9701053
(87) International publication number: WO9732739

(56) References cited:
- EP-A- 0 046 489
- EP-A- 0 301 553
- DE-A- 1 780 526
- DE-A- 4 114 776
- US-A- 4 533 184
- US-A- 4 700 813

## Description

### Technical Field

The present invention relates to a motor vehicle wheel rim.

### Background Art

It is known that in order to allow a motor vehicle to ensure maximum operating safety, the braking system must always be in a condition of maximum operating efficiency.

In particular, a very important parameter in determining brake efficiency is temperature.

It is known, in fact, that brakes, regardless of their kind, operate substantially by friction.

The friction produced by the brakes is converted directly into heat which, unless it is dissipated, causes an increase in the temperature of the brakes and of the surrounding regions.

Therefore, one of the main problems about maintaining maximum brake efficiency is the dissipation of the heat produced by the brakes during operation.

A wide variety of wheel rims is currently commercially available; many have been designed and produced while totally neglecting the problem of brake cooling.

In many wheel rims, in fact, there is not even the slightest provision for dissipating the heat produced by the brakes, delegating this dissipation to the normal flow of air which strikes the motor vehicle and partially flows into the seats meant to accommodate the brakes.

Some models, produced also with the intent to dissipate the heat produced by the brakes, instead have fronts which are shaped so as to convey outside air onto the brakes, cooling them.

However, laboratory tests and practical tests have demonstrated that the conveyance of cool air onto the brakes, while producing some heat dissipation, does not have particularly high efficiency levels.

It is also known that in the sports field some endurance competition cars have used extractor fans made of composite material and mounted on the outside of the wheel rims.

This solution, however, although improving the efficiency of the dissipation of the heat produced by the brakes, is extremely complicated and difficult to transfer to the mass market.

DE-1,780,526 discloses a wheel rim provided with air inlet arranged radially towards the center of the wheel. However, such air inlets do not have a NACA profile, have a constant cross-section as far as the height of the inlet is concerned and their outer end is not contained in a plane which is orthogonal to a plane containing a front region of the wheel.

A principal aim of the present invention is to provide a vehicle wheel rim which solves the above-described drawbacks of conventional models, particularly by providing an efficient dissipation of the heat produced by the brakes.

Accordingly, an object of the present invention is to provide a wheel rim which is structurally simple and can be produced, and even mass-produced, at competitive costs with respect to conventional wheel rims.

Another object of the present invention is to provide a wheel rim the structure whereof allows executions having also a styling value.

Another object of the present invention is to provide a wheel rim the mechanical and structural characteristics whereof are competitive with respect to conventional models.

Another object of the present invention is to provide a wheel rim which can be produced in various types which are adapted for specific motor vehicles.

Another object of the present invention is to provide a wheel rim which can be manufactured with conventional technologies.

This aim, these objects, and others which will become apparent hereinafter are achieved by a wheel rim for vehicles, as defined in claim 1. Further characteristics of the invention are defined in dependent claims 2-3.

Further characteristics and advantages of the present invention will become apparent from the following detailed description of an embodiment thereof, illustrated only by way of non-limitative example in the accompanying drawings, wherein:
figure 1 is a perspective view of a wheel rim according to the present invention;
figure 2 is an elevation side view of the wheel rim of figure 1;
figure 3 is another elevation side view of the wheel rim of figure 1;
figure 4 is a partially sectional view of a detail of the wheel rim of figure 1;
figure 5 is a diametrical sectional view of the wheel rim of figure 1.

### Ways of carrying out the Invention

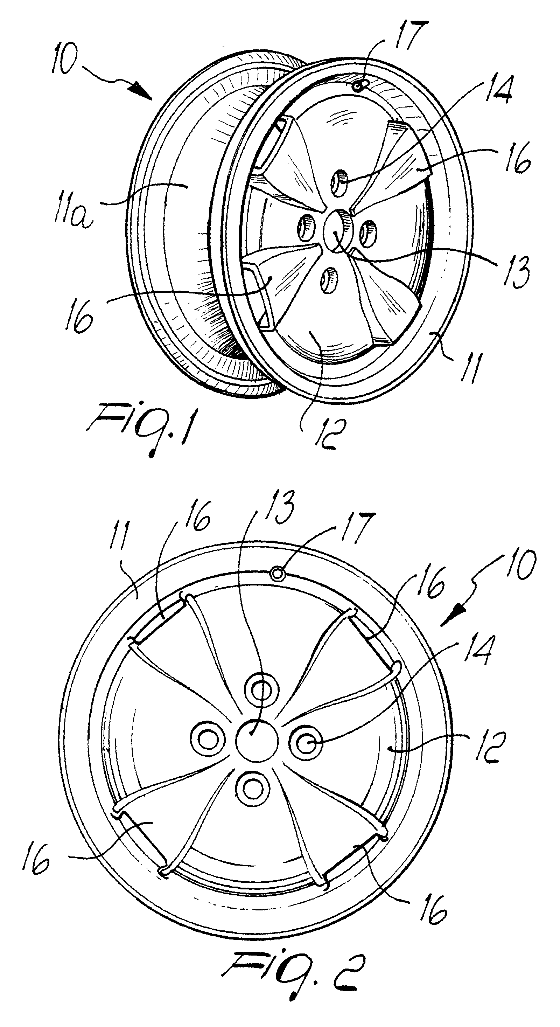

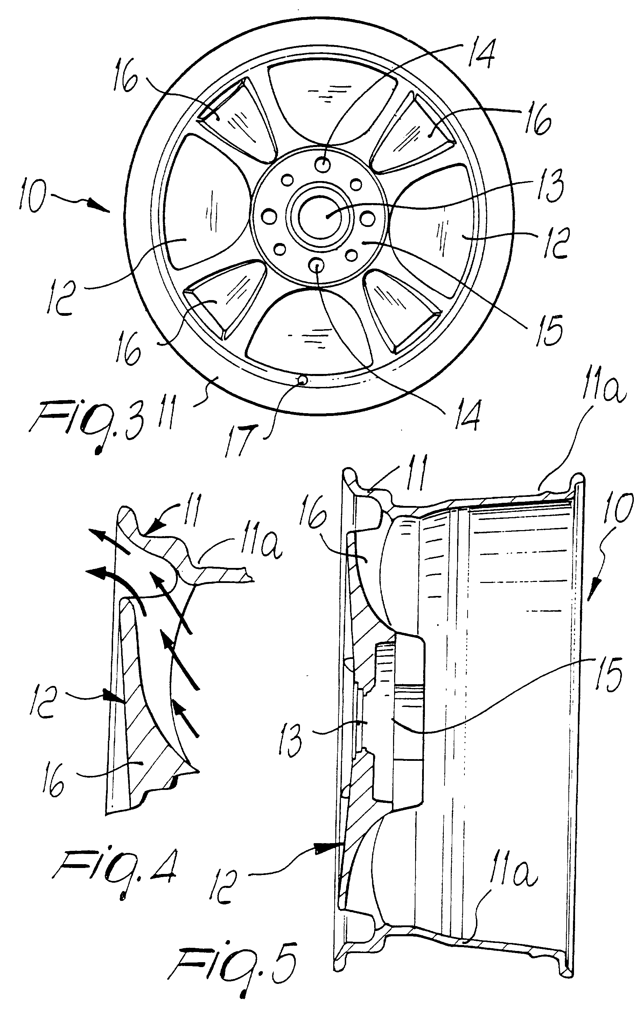

With particular reference to figures 1 to 5, a motor vehicle wheel rim according to the invention is generally designated by the reference numeral 10.

The wheel rim 10 comprises a portion 11, which forms a corresponding annular channel lla wherein the tire, not shown, is fixed, and a front region 12 which is rigidly coupled to portion 11.

In this case, the wheel rim 10 is made monolithically of aluminum alloy or of another light alloy.

The front region 12 has an axial hole 13 adapted for the insertion of an end of one of the axles of the motor vehicle, not shown, and surrounded by through holes 14 adapted for the insertion of the bolts, also not shown, meant to fix the wheel rim 10 to the corresponding axle.

The front region 12 is also shaped so as to form a seat 15 which is directed inwards, is coaxial to the hole 13, and is also meant to center and associate the wheel rim 10 with the corresponding axle.

In this case, the front region 12 is shaped so as to form, when mounted on the axle, at least one NACA air intake 16 which is directed towards the corresponding brake, not shown, and is adapted to extract from the inside outwards, by means of a suction induced by the centrifugal dynamics of the wheel rim, the air which is adjacent to the corresponding brake and is overheated when the brake is being used.

NACA intakes (the acronym stands for National Advisory Committee for Aeronautics) are conventionally "substantially triangular" air intakes designed for straight-line relative motions in order to provide the best possible compromise between maximum flow efficiency and minimum drag.

In the embodiment described herein, four air intakes 16 are disclosed and they are arranged radially and in a cross-like fashion.

The intakes 16 have each a respective inlet end which has a narrower cross-section than the rest and is arranged towards the center of the wheel rim.

The intakes 16, applied conveniently radially with respect to a rotating element such as a wheel rim 10, produce an effect which is the opposite of the effect for which they were devised, acting as actual extractors.

The wheel rim 10 also has, in a circumferential region, a through hole 17 which is adapted for the insertion of the valve of the tire, which is not shown.

In practice it has been observed that the present invention has achieved the intended aim and objects.

It should in fact be noted that the wheel rim according to the invention, by removing by suction the heat produced by the brakes, achieves a very high dissipation efficiency, consequently maintaining an equally high efficiency of the braking system.

It should also be noted that the wheel rim according to the invention can provide models having a high styling value.

It should also be noted that the embodiment and the wheel rim according to the invention do not entail particular technological problems and maintain production costs competitive with respect to conventional wheel rims.

The present invention is susceptible of numerous modifications and variations, all of which are within the scope of the inventive concept; thus, for example, the number of NACA intakes can be different from four arranged in a cross-like configuration; typically, a good aesthetic effect is produced by the provision of five or more radial NACA intakes arranged equidistantly.

All the details can be replaced with other technically equivalent elements.

The materials and the dimensions may be any according to the requirements.

## Claims

1. A wheel rim (10) for vehicles, characterized in that it comprises a front region (12) which is shaped so as to form, upon assembly, at least one NACA air intake (16) which is directed towards the corresponding brake and is adapted to extract the air adjacent to the corresponding brake of the wheel from the inside outwards by suction induced by the centrifugal dynamics of the wheel rim, said NACA air intake (16) has an inlet end having a cross-section which is narrower and of lower height than the rest of the air intake and is arranged towards an inner central region of the wheel rim, the outer end being arranged towards a peripheral external region of the wheel rim and being contained in a plane which is orthogonal to a plane containing said front region.

2. The wheel rim according to claim 1, characterized in that said wheel rim (10) comprises four NACA air intakes (16) arranged radially and in a cross-like fashion.

3. The wheel rim according to claim 1, characterized in that said wheel rim (10) is made of light alloy.

## Patentansprüche

1. Radfelge (10) für Fahrzeuge, dadurch gekennzeichnet, daß diese einen Vorderbereich (12) hat, der derart geformt ist, daß er bei der Montage zumindest einen NACA-Lufteinlaß (16) bildet, welcher der entsprechenden Bremse zugewandt ist und dazu geeignet ist, die an die entsprechende Bremse des Rades angrenzende Luft von innen nach außen durch das Ansaugen, das durch die Zentrifugaldynamik der Radfelge induziert wird, anzusaugen, wobei der NACA-Lufteinlaß (16) ein Einlaßende mit einem Querschnitt hat, der schmaler und niedriger ist als der übrige Lufteinlaß und in Richtung eines inneren Zentralbereichs der Radfelge weisend angeordnet ist, während das äußere Ende in Richtung eines Außenrandbereichs weisend angeordnet ist und in einer Ebene liegt, die senkrecht zu einer den Vorderbereich enthaltenden Ebene ist.

2. Radfelge nach Anspruch 1, dadurch **gekennzeichnet,** daß die Radfelge (10) vier NACA-Lufteinlässe (16) hat, die radial angeordnet sind und eine Kreuzform bilden.

3. Radfelge nach Anspruch 1, dadurch **gekennzeichnet,** daß die Radfelge (10) aus einer Leichtmetallegierung hergestellt ist.

## Revendications

1. Jante de roue (10) pour véhicules, caractérisée en ce qu'elle comprend une région avant (12) qui est profilée de manière à former, à l'assemblage, au moins une prise d'air NACA (16) qui est dirigée vers le frein correspondant et est adaptée pour extraire l'air au voisinage du frein correspondant de la roue de l'intérieur vers l'extérieur par l'aspiration induite par la dynamique centrifuge de la jante de roue, ladite prise d'air NACA (16) a une extrémité d'entrée ayant une section qui est plus étroite et de hauteur moindre que le reste de la prise d'air et est agencée vers une région centrale intérieure de la jante de roue, l'extrémité extérieure étant agencée vers une région externe périphérique de la jante de roue et étant contenue dans un plan qui est perpendiculaire à un plan contenant ladite région avant.

2. Jante de roue selon la revendication 1, caractérisée en ce que ladite jante de roue (10) comprend quatre prises d'air NACA (16) agencées en direction radiale et en motif de croix.

3. Jante de roue selon la revendication 1, caractérisée en ce que ladite jante de roue (10) est fabriquée en alliage léger.
